(19) Europäisches Patentamt

European Patent Office

Office européen des brevets

(11) **EP 1 377 416 B1**

(12) **EUROPEAN PATENT SPECIFICATION**

(45) Date of publication and mention
of the grant of the patent:
**15.03.2006 Bulletin 2006/11**

(51) Int Cl.:
**B26F 1/26** (2006.01)

(21) Application number: **02722967.3**

(22) Date of filing: **10.04.2002**

(86) International application number:
**PCT/NL2002/000230**

(87) International publication number:
**WO 2002/083378 (24.10.2002 Gazette 2002/43)**

(54) **METHOD AND CYLINDER FOR PERFORATING A THIN FILM**

VERFAHREN SOWIE ZYLINDER ZUM PERFORIEREN EINER DÜNNEN FOLIE

PROCEDE AINSI QUE CYLINDRE DE PERFORATION D'UN FILM MINCE

(84) Designated Contracting States:
**AT BE CH CY DE DK ES FI FR GB GR IE IT LI LU MC NL PT SE TR**

(30) Priority: **12.04.2001 NL 1017834**

(43) Date of publication of application:
**07.01.2004 Bulletin 2004/02**

(73) Proprietor: **Stork Prints B.V.**
**5831 AT Boxmeer (NL)**

(72) Inventors:
• **VAN WEPEREN, Karst, Jan**
**NL-5403 NK Uden (NL)**
• **DIEBELS, Bernard, Pierre**
**NL-5926 SR Venlo (NL)**

(74) Representative: **Volmer, Johannes Cornelis**
**Exter Polak & Charlouis B.V.,**
**P.O. Box 3241**
**2280 GE Rijswijk (NL)**

(56) References cited:
**WO-A-00/59436**          **DE-A- 19 842 956**
**US-A- 3 054 148**        **US-A- 4 609 518**
**US-A- 5 718 928**        **US-A- 5 945 196**

**Description**

The invention relates to methods and devices for perforating a thin film, in particular a plastic film, in which the film is guided over a hollow perforating cylinder, which is provided with through-openings separated by dykes and is made from fibre-reinforced plastic, and a fluid pressure difference is applied to the film, such that perforations and/or indentations are formed in the thin film according to the preamble of claims 1, 2, 3, 13,14 and 15.

A method and a device of this kind is known in the art, for example from US-A-30541480, which represents the closest prior art. This document discloses inter alia a method for manufacturing decorative thermoplastic sheet products, wherein a uniformly softened thermoplastic material web is contacted with a continuously moving molding element, while a surface of the thermoplastic material web is subjected to a fluid pressure differential, e.g. vacuum, such that the softened material flows into perforations of the molding element until rupture occurs. The molding element may be a hollow cylinder, which is perforated in accordance with a predetermined design. It is said that the molding element can be made of a variety of materials, among which are a synthetic resin or plastic sheet, that can be reinforced with fibre or fabric lamination. It is known that the addition of fibres in general imparts a higher strength to plastic materials. However, woven wire mesh is preferred. In the specific embodiment shown the molding element is mounted around the surface of a stationary supporting cylindrical drum in a manner, which allows free rotation of the molding element around the drum. The products obtained are suitable for use as simulated fabrics and woven materials.

In general it is important for it to be possible for the material from which the perforating cylinder is made to be processed easily, in order to give it desired characteristics and/or properties, preferably with the aid of a laser. Furthermore, for some applications, in which the cylinder is not supported over its entire circumference by a supporting roller, for example, but rather is held only at the ends of the cylinder with the aid of so-called end rings, a cylinder of this type has to be rigid (in the longitudinal direction), in particular if the length is relatively great, so that the cylinder is easy to handle, cannot easily be damaged, while sagging of the cylinder remains within acceptable limits. In the prior art, it is generally accepted that it is impossible to produce hollow cylinders from fibre-reinforced plastic materials with a relatively large diameter and a small wall thickness , while the cylinder nevertheless has the required mechanical and chemical properties for perforating a plastic film.

It is also known that, under load including elevated temperatures, plastic materials are deformed more readily than metal, for example nickel, as a result of creep.

It is an object of the present invention to provide a method for perforating a thin film, in particular a plastic film, using a hollow cylinder which is easy to handle, is extremely rigid, and which can easily be processed, for example using high-energy radiation.

The methods according to the invention, are disclosed in claims 1, 2 and 3.

In the present specification, a fibre-reinforced plastic material is understood as meaning a plastic matrix layer which incorporates reinforcing fibres.

Furthermore, because of the oriented fibres the perforating cylinder can have a relatively small wall thickness (at most approximately 1 mm), thereby achieving weight reduction and improved handling and processing. Due to the increased strength and rigidity, the presence of a fully supporting drum as in US-A-3 054 148 is not required.

The use of unidirectional fibres in principle provides the highest strength which can be achieved. Furthermore, the highest fibre content can be achieved in layers with unidirectional fibres, and consequently the highest modulus of elasticity can be achieved when using fibres of this type.

A single layer of plastic with incorporated fibres which are oriented in one direction has anisotropic elastic properties, i.e. the properties are dependent on the direction in which the load acts. According to the invention, this anisotropy is in fact made use of in order to counteract deformation in the direction of the load, which load may occur during the perforating method. The exact direction of the load and therefore the most favourable direction of orientation of the fibres in the plastic matrix may differ from case to case.

The improved ease of handling the perforating cylinder may require an upper limit of the wall thickness not to be exceeded, also taking into account the axial length and diameter. The total wall thickness is advantageously in the range from 0.010-1 mm (10-1.000 micrometers). More preferably, the total wall thickness is in the range from 0.010-0.700 mm, and most preferably in the range from 0.020 - 0.300 mm.

To counteract bending, particularly in the case of long cylinders, it is preferred for the oriented fibre direction to run parallel to the longitudinal axis of the cylinder.

For other embodiments, the direction of orientation of the fibres preferably runs perpendicular to the longitudinal axis of the cylinder.

According to another embodiment of the cylinder, the cylinder comprises a first layer having fibres in a first direction of orientation of the fibres, and a second layer having fibres in a second direction of orientation of the fibres, the first and second directions of orientation being identical. As has already been indicated above, the separate layers with unidirectional fibres may have a high fibre content (compare a fibre content of 63% by volume for a unidirectional carbon fibre in epoxy resin with a fibre content of approximately 35% by volume for a nonwoven in epoxy resin), which is advantageous for the elastic properties. The fibre content of the cylinder according to the invention is preferably greater than 45% by volume, more preferably greater than 55% by volume. A perforating cylinder of this type is assembled advantageously from at least two layers of fibre-reinforced plastic, the fibres in one layer being oriented in one direction, the fibre directions of the various layers not running parallel to one another. The direction of orientation of the fibres in the first layer advantageously forms an angle $\alpha$ with the longitudinal axis of the cylinder, and the direction of orientation of the fibres in the second layer advantageously forms an angle $-\alpha$ with the longitudinal axis of the cylinder. The cylinder may advantageously also comprise an additional layer having fibres in a third oriented direction of the fibres, which direction is either parallel or perpendicular to the longitudinal axis of the cylinder. More preferably, this additional layer is located between the first and second layers.

Examples of a suitable angle $\alpha$ are 0°, 30°, 45° and angles of more than 60°. A three-layer laminate has, for example, angles of 0° and $\pm$ 60°, or 0° and $\pm$ 45°, or 0° and 90° (x2) with respect to the longitudinal axis of the cylinder. Other examples are 90° $\pm$ 30°, or 90° $\pm$ 45° or 0° (x2) and 90° with respect to the longitudinal axis of the cylinder. Multilayer laminates, preferably with a symmetrical structure as seen in the thickness direction, can also advantageously be employed.

If present, the layer with fibres which are oriented parallel to the longitudinal axis of the cylinder is greater than the layer thickness of the other layers. Furthermore the ratio of the total wall thickness to the radius R (in mm) of the cylinder is advantageously less than or equal to 0.0050 ($d^{tot}/R \leq 0.0050$). Cylinders of this type are extraordinarily thin and therefore lightweight, yet still have the required mechanical properties and can easily be processed.

The directions of orientation of the fibres, the layer thickness and the materials can be varied, although there are preferred directions and materials, depending on the required final treatment, as has already been stated above.

Examples of known suitable fibre materials include carbon fibres, inorganic fibres, such as glass fibres and boron fibres, metal fibres and organic polymer fibres, such as stretched fibres, for example aramid fibres and fibres of stretched high-strength polyethylene, as well as combinations thereof. Carbon fibres and inorganic fibres are particularly preferred, and of these carbon fibres are most preferred. The plastic used for the plastic matrix is not critical, since compared to the fibres this plastic matrix makes little contribution to the mechanical properties of the cylinder. The plastic can be selected from known thermoplastics, such as polyesters, and thermosetting plastics, such as epoxy resins. The combination of carbon in epoxy is preferred, on account of the excellent relationship between cost price and strength. The strength of this combination is virtually twice as great as that of kevlar/epoxy and three times as great as that of glass/epoxy. Other combinations with an even higher strength include carbon/polyimide, graphite/epoxy and siliconcarbide/ceramic. However, these combinations are expensive. The single-layer materials mentioned above are commercially available.

The elastic parameters for a number of single-layer combinations of fibre and plastic matrix are described, inter alia, in "Engineering Mechanics of Composite Materials", I.M. Daniel et al., Oxford University Press, 1994, and summarized in Table 1 below.

Table 1

| | Fibre content (% by volume) | Modulus of elasticity // fibres (GPa) | Modulus of elasticity $\perp$ fibres (GPa) | Sliding modulus (GPa) | Poisson's ratio |
|---|---|---|---|---|---|
| E-glass/ epoxy | 55 | 39 | 8.6 | 3.8 | 0.28 |
| S-glass/ epoxy | 50 | 43 | 8.9 | 4.5 | 0.27 |
| Kevlar/ epoxy | 60 | 87 | 5.5 | 2.2 | 0.34 |
| Carbon/ PEEK | 58 | 131 | 8.7 | 5.0 | 0.28 |
| Carbon/ epoxy | 63 | 142 | 10.3 | 7.2 | 0.27 |
| Carbon/ polyimide | 45 | 216 | 5.0 | 4.5 | 0.25 |
| Graphite/ epoxy | 57 | 294 | 6.4 | 4.9 | 0.23 |
| Silicon carbide/ ceramic | 39 | 121 | 112 | 44 | 0.20 |

In the perforating method according to the invention the perforating cylinder is provided with through-openings or continuous openings, through which openings a fluid pressure difference is applied to a surface of the film. It is advantageous for a vacuum to be applied to the underside of the film, for which purpose the interior of the hollow perforating cylinder is connected to a suitable vacuum source. Another possibility is to create an excess pressure on the outer side of the film, which is guided over the cylinder, which is provided with openings, using a pressurized fluid, such as gas or liquid. Perforated plastic films are produced by heating a thin film, for example of polyethylene, and guiding the film which has been heated in this way over the perforating cylinder and sucking the film partly into the openings by means of a vacuum which is applied to the film through the openings in the cylinder. When the vacuum applied is high enough, the film is permanently deformed in the openings and breaks, with the result that perforations in the film are created at these locations. As an alternative to a heated film, this method can also be carried out using a molten film which has been produced from granules.

If, in the case of a cylinder provided with openings, only a slight pressure difference is applied to the film, so that it does not break, the film may simply be deformed. Consequently, a cylinder of this type can be used both for perforating and for deforming (embossing), depending on the selected operating conditions and the film properties.

The longitudinal axis of a through-opening advantageously forms an angle $\beta$ with a tangent plane on the cylinder at the location of the opening, this angle not being equal to 90°. This means that the longitudinal axis of a through-opening does not intersect the longitudinal axis of the cylinder. With an inclined configuration of the through-openings of this type, it is possible to form what are known as slanted holes in the film during perforation, which is favourable with a view to pressing the perforations closed in the final product. This property of the film is desirable in particular when the film is used in health and hygiene products.

With respect thereto it is noted that DE-A1-198 42 956 discloses a perforated sheet product having such slanted holes, and a perforating cylinder having oblique openings.

It is preferable for the relationship between the wall thickness d of the cylinder, the hydraulic diameter D of an opening and the angle $\alpha$ which the longitudinal axis of the opening forms with a tangent on the cylinder at the location of the opening to be $d \geq D/\cos \alpha$. As a result, no direct incidence of light through the through-openings is detected in a direction perpendicular to the cylinder surface.

To improve the removal of the perforated films from the cylinder, the ratio of the thickness (d) of the cylinder to the maximum ratio ($r_{max}$) of an opening on the working side of the cylinder is advantageously more than 1.15. This means that the plastic film does not stick to the cylinder and also cannot become caught on the inner side of the cylinder through the openings.

Examples of products, made from a thin film that is perforated according to the invention, comprise absorbent articles, such as absorbent items for personal hygiene, for example diapers, but also decorative items.

The through-openings in the perforating cylinder can easily be made with the aid of high-energy radiation, such as a laser or an electron beam. The through-openings may be arranged randomly, in a regular pattern or in a configuration in which the openings together form an image. The possibilities also include decorative patterns, and also clustered openings which together define, for example, a logo or other mark. The openings may have different diameters, for example first openings with a first diameter being arranged in a first area, and second openings with a second diameter being arranged in a second area, which second area does not correspond to the first area. Other possible configurations include combined patterns of such openings with different diameters or areas which partially overlap one another. The statements which have been made above in connection with openings also apply in a similar way to relief elements, such a protuberances and recesses, in combination with perforating openings.

If a perforating cylinder is self-supporting, i.e. is held in (conical) end rings, the fibres in the fibre-reinforced plastic layer are preferably oriented axially, with a view to sagging, advantageously in a range from 0-20° with respect to the longitudinal axis of the embossing cylinder. If the perforating cylinder is supported by a supporting roller, the fibres in the fibre-reinforced plastic layer are preferably oriented radially, on account of expansion, advantageously in the range from 70-90° with respect to the longitudinal axis of the cylinder.

Embossing and perforating may advantageously be combined if the cylinder is produced suitably for this purpose. In this case, the cylinder comprises a section with through-openings which are used to make the perforations, and a relief area which is used for the embossing.

Since the fibre-reinforced plastic material is easy to process, for example, as indicated above, by means of high-energy radiation, such as a laser, but also by punching, stamping or cutting using water jets, the openings and uneven relief structures can be applied in any form.

The invention also relates to a perforating cylinder as defined in claims 13-25.

The invention is explained below with reference to the appended drawing, in which:

Fig. 1 shows an embodiment of a cylinder for a combination of perforating and several other treatments of a thin film according to the invention; and

Fig. 2-4 show details of that section of the cylinder shown in Fig. 1 which is provided with openings;

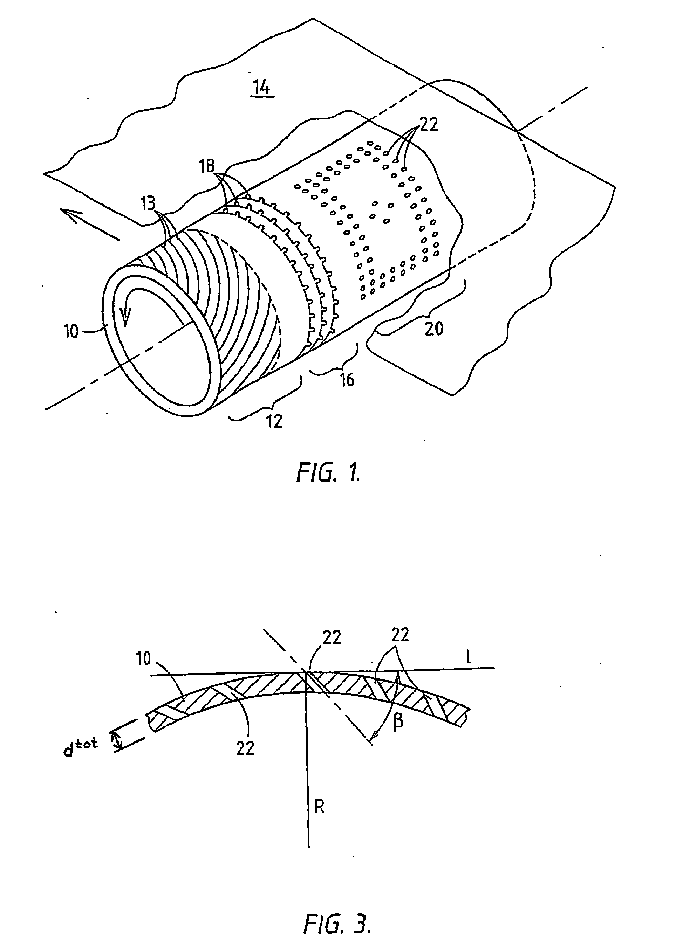

Fig. 1 shows a thin-walled hollow cylinder 10 made from epoxy which is reinforced with carbon fibres in the circumferential direction and is provided at both ends with a smoothing area 12 (only one of which is shown) for smoothing a thin plastic film web 14. The smoothing area 12 comprises a number of projections in a linear pattern, which are denoted overall by reference number 13 in this figure, for the sake of simplicity. The projections force, in the indicated direction of rotation of the cylinder 10, the edges of the film web 14 outwards. In addition to the smoothing area 12, there is a relief area 16, comprising a pattern of protuberances 18 with recessed sections between them, for applying a relief to the film web 14. In the situation illustrated, in the centre there is a perforating area 20, which comprises a pattern of through-openings 22 applied using a laser. A vacuum device, which is connected to the interior of the cylinder 10, so that the film web 14 can be sucked up through the openings 22, is not shown.

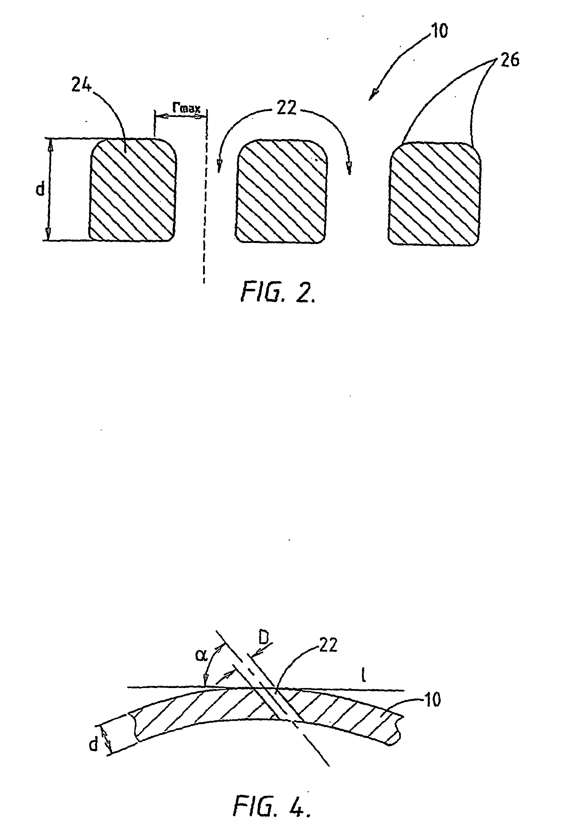

Fig. 2 shows a cross section through the perforating area 20. The openings 22 are delimited by dykes 24. The maximum radius of an opening 22 on the operating side of the cylinder 10 is denoted by $r_{max}$. The thickness of the cylinder is denoted by d. $d/r_{max}$ is greater than 1.15. The rounded corners 26 ensure that the film 14 is released successfully.

Fig. 3 shows that the openings 22 are not arranged radially in the direction of the radius R of the cylinder, but rather obliquely, so that the longitudinal axis of an opening 22 forms an angle $\beta \neq 90°$ with the tangent plane 1 at the location of the opening 22. The total wall thickness is indicated by $d^{tot}$.

Fig. 4 shows another detail of the cylinder 10 shown in Fig. 1. The hydraulic diameter of an opening 22 is denoted by D. The longitudinal axis of the opening 22 forms an angle $\alpha$ with a tangent plane 1 on the cylinder 10 at the location of the opening 22. The relationship $d \geq D/\cos \alpha$ applies, so that when the opening 22 is viewed in a direction perpendicular to the tangent plane on the cylinder, it is impossible to see any direct transmission of light. This embodiment of the cylinder is particularly favourable for obtaining plastic film with slanted holes.

**Claims**

1. Method for perforating a thin film (14), in particular a plastic film, in which the film (14) is guided over a hollow perforating cylinder (10), which is provided with through-openings (22) separated by dykes (24) and is made from fibre-reinforced plastic, and a fluid pressure difference is applied to the film (14), such that perforations are formed in the thin film (14), **characterized in that** the perforating cylinder is a thin-walled cylinder (10) held in end rings, said cylinder (10) having a total wall thickness in the range of 0.010-1 mm, wherein the fibres of the fibre-reinforced plastic are oriented axially in a range from 0-20° with respect to the longitudinal axis of the cylinder.

2. Method for perforating a thin film (14), in particular a plastic film, in which the film (14) is guided over a hollow perforating cylinder (10), which is provided with through-openings (22) separated by dykes (24) and is made from fibre-reinforced plastic, and a fluid pressure difference is applied to the film (14), such that perforations are formed in the thin film (14), **characterized in that** the perforating cylinder is a thin-walled cylinder (10) supported by a supporting roller, said cylinder (10) having a total wall thickness in the range of 0.010-1 mm, wherein the fibres of the fibre-reinforced plastic are oriented radially in a range from 70-90° with respect to the longitudinal axis of the cylinder (10).

3. Method for perforating a thin film (14), in particular a plastic film, in which the film (14) is guided over a hollow perforating, cylinder (10), which is provided with through-openings (22) separated by dykes (24) and is made from fibre-reinforced plastic, and a fluid pressure difference is applied to the film (14), such that perforations are formed in the thin film (14), **characterized in that** the perforating cylinder is a thin-walled cylinder (10), having a total wall thickness in the range of 0.010-1 mm, assembled from at least two layers of fibre-reinforced plastic, the fibres in one layer being oriented in one direction, the fibre directions of the various layers not running parallel to one another.

4. Perforating method according to one of the preceding claims, **characterized in that** the total wall thickness of the cylinder is in the range from 0.010-0.700.

5. Perforating method according to claim 4, **characterized in that** the total wall thickness of the cylinder is in the range from 0.020-0.300.

6. Perforating method according to one of the preceding claims, **characterized in that** the fibre-reinforced plastic comprises one or more layers with unidirectional fibres.

7. Perforating method according to one of the preceding claims, **characterized in that** the fibre content is more than 45% by volume.

8. Perforating method according to claim 7, **characterized in that** the fibre content is more than 55% by volume.

9. Perforating method according to one of the preceding claims, **characterized in that** the longitudinal axis of a through-opening (22) forms an angle β with a tangent plane (1) on the cylinder (10) at the location of the corresponding opening (22), it being the case that β ≠ 90°.

10. Perforating method according to one of the preceding claims, **characterized in that** the relationship between the wall thickness (d) of the cylinder (10), the hydraulic diameter (D) of an opening (22) and the angle $\alpha$ which the longitudinal axis of the opening (22) forms with the tangent plane (1) on the cylinder (10) at the location of the opening (22) is

$$d \geq D/\cos\alpha.$$

11. Perforating method according to one of the preceding claims, **characterized in that** the ratio of the wall thickness (d) of the cylinder (10) to the maximum radius ($r_{max}$) of an opening (22) on the operating side of the cylinder (10) is more than 1.15.

12. Method according to one of the preceding claims, **characterized by** the simultaneous embossing of another section of the film (14), the outer surface of the perforating cylinder (10) also comprising a relief area (16).

13. Perforating cylinder for perforating thin film, comprising a hollow cylinder (10) which is provided with through-openings (22) separated by dykes (24), and is made from fibre-reinforced plastic, **characterized in that** the perforating cylinder is a thin-walled cylinder (10) held in end rings, said cylinder (10) having a total wall thickness in the range of 0.010-1 mm, wherein the fibres of the fibre-reinforced plastic are oriented axially in a range from 0-20° with respect to the longitudinal axis of the cylinder (10).

14. perforating cylinder for perforating thin film, comprising a hollow cylinder (10) which is provided with through-openings (22) separated by dykes (24), and is made from fibre-reinforced plastic, **characterized in that** the perforating cylinder is a thin-walled cylinder (10) supported by a supporting roller, said cylinder (10) having a total wall thickness in the range of 0.010-1 mm, wherein the fibres of the fibre-reinforced plastic are oriented radially in a range from 70-90° with respect to the longitudinal axis of the cylinder (10).

15. Perforating cylinder for perforating thin film, comprising a hollow cylinder (10) which is provided with through-openings (22) separated by dykes (24), and is made from fibre-reinforced plastic, **characterized in that** the perforating cylinder is a thin-walled cylinder (10) having a total wall thickness in the range of 0.010-1 mm, which is assembled from at least two layers of fibre-reinforced plastic, the fibres in one layer being oriented in one direction, the fibre directions of the various layers not running parallel to one another.

16. Perforating cylinder according to one of the preceding claims 13-15, **characterized in that** the total wall thickness of the cylinder is in the range from 0.010-0.700.

17. Perforating cylinder according to claim 16, **characterized in that** the total wall thickness of the cylinder is in the range from 0.020-0.300.

18. Perforating cylinder according to one of the preceding claims 13-17, **characterized in that** the fibre-reinforced plastic comprises one or more layers with unidirectional fibres.

19. Perforating cylinder according to one of the preceding claims 13-18, **characterized in that** the fibre content is more than 45% by volume.

20. Perforating cylinder according to claim 19, **characterized in that** the fibre content is more than 55% by volume.

21. Perforating cylinder according to one of the preceding claims 13-20, **characterized in that** the longitudinal axis of a through-opening (22) forms an angle β with a tangent plane (1) on the cylinder (10) at the location of the corresponding opening (22), provided that β≠90°.

22. Perforating cylinder according to one of the preceding claims 13-21, **characterized in that** the relationship between the wall thickness (d) of the cylinder (10), the hydraulic diameter (D) of an opening (22) and the angle $\alpha$ which the

longitudinal axis of the opening (22) forms with a tangent plane (1) on the cylinder (10) at the location of the opening (22) is d ≥ D/cos α.

23. Perforating cylinder according to one of the preceding claims 13-22, **characterized in that** the ratio of the wall thickness (d) of the cylinder (10) to the maximum radius ($r_{max}$) of an opening (22) on the operating side being more than 1.15.

24. Perforating cylinder according to one of the preceding claims 13-23, **characterized in that** the through-openings (22) have different diameters.

25. Perforating cylinder according to one of the preceding claims 13-24, **characterized in that** the cylinder also comprises at least one relief area (16) for embossing the thin film.

**Patentansprüche**

1. Verfahren zum Perforieren eines dünnen Films (14), insbesondere eines Kunststofffilms, wobei der Film (14) über einen hohlen Perforierzylinder (10) geführt wird, der mit Durchgangsöffnungen (22) versehen ist, die durch Dämme (24) getrennt sind, und aus faserverstärktem Kunststoff besteht, und eine Fluiddruckdifferenz auf den Film (14) angewendet wird, sodass Perforationen im dünnen Film (14) ausgebildet werden, **dadurch gekennzeichnet, dass** der Perforierzylinder ein dünnwandiger Zylinder (10) ist, der in Endringen gehalten wird, wobei der Zylinder (10) eine gesamte Wanddicke im Bereich von 0,010-1 mm aufweist, wobei die Fasern des faserverstärkten Kunststoffs in einem Bereich von 0-20° bezüglich der Längsachse des Zylinders axial orientiert sind.

2. Verfahren zum Perforieren eines dünnen Films (14), insbesondere eines Kunststofffilms, wobei der Film (14) über einen hohlen Perforierzylinder (10) geführt wird, der mit Durchgangsöffnungen (22) versehen ist, die durch Dämme (24) getrennt sind, und aus faserverstärktem Kunststoff besteht, und eine Fluiddruckdifferenz auf den Film (14) angewendet wird, sodass Perforationen im dünnen Film (14) ausgebildet werden, **dadurch gekennzeichnet, dass** der Perforierzylinder ein dünnwandiger Zylinder (10) ist, der durch eine Stützwalze abgestützt wird, wobei der Zylinder (10) eine gesamte Wanddicke im Bereich von 0,010-1 mm aufweist, wobei die Fasern des faserverstärkten Kunststoffs in einem Bereich von 70-90° bezüglich der Längsachse des Zylinders (10) radial orientiert sind.

3. Verfahren zum Perforieren eines dünnen Films (14), insbesondere eines Kunststofffilms, wobei der Film (14) über einen hohlen Perforierzylinder (10) geführt wird, der mit Durchgangsöffnungen (22) versehen ist, die durch Dämme (24) getrennt sind, und aus faserverstärktem Kunststoff besteht, und eine Fluiddruckdifferenz auf den Film (14) angewendet wird, sodass Perforationen im dünnen Film (14) ausgebildet werden, **dadurch gekennzeichnet, dass** der Perforierzylinder ein dünnwandiger Zylinder (10) mit einer gesamten Wanddicke im Bereich von 0,010-1 mm ist, der aus mindestens zwei Schichten von faserverstärktem Kunststoff zusammengefügt ist, wobei die Fasern in einer Schicht in einer Richtung orientiert sind, wobei die Faserrichtungen der verschiedenen Schichten nicht parallel zueinander verlaufen.

4. Perforationsverfahren nach einem der vorangehenden Ansprüche, **dadurch gekennzeichnet, dass** die gesamte Wanddicke des Zylinders im Bereich von 0,010-0,700 liegt.

5. Perforationsverfahren nach Anspruch 4, **dadurch gekennzeichnet, dass** die gesamte Wanddicke des Zylinders im Bereich von 0,020-0,300 liegt.

6. Perforationsverfahren nach einem der vorangehenden Ansprüche, **dadurch gekennzeichnet, dass** der faserverstärkte Kunststoff eine oder mehrere Schichten mit unidirektionalen Fasern umfasst.

7. Perforationsverfahren nach einem der vorangehenden Ansprüche, **dadurch gekennzeichnet, dass** der Fasergehalt mehr als 45 Volumenprozent ist.

8. Perforationsverfahren nach Anspruch 7, **dadurch gekennzeichnet, dass** der Fasergehalt mehr als 55 Volumenprozent ist.

9. Perforationsverfahren nach einem der vorangehenden Ansprüche, **dadurch gekennzeichnet, dass** die Längsachse einer Durchgangsöffnung (22) einen Winkel β mit einer Tangentenebene (1) am Zylinder (10) an der Stelle der entsprechenden Öffnung (22) bildet, wobei es der Fall ist, dass $\beta \neq 90°$.

10. Perforationsverfahren nach einem der vorangehenden Ansprüche, **dadurch gekennzeichnet, dass** die Beziehung zwischen der Wanddicke (d) des Zylinders (10), dem hydraulischen Durchmesser (D) einer Öffnung (22) und dem Winkel $\alpha$, den die Längsachse der Öffnung (22) mit der Tangentenebene (1) am Zylinder (10) an der Stelle der Öffnung (22) bildet,

$$d \geq D/\cos \alpha$$

ist.

11. Perforationsverfahren nach einem der vorangehenden Ansprüche, **dadurch gekennzeichnet, dass** das Verhältnis der Wanddicke (d) des Zylinders (10) zum maximalen Radius ($r_{max}$) einer Öffnung (22) auf der Betriebsseite des Zylinders (10) mehr als 1,15 ist.

12. Verfahren nach einem der vorangehenden Ansprüche, **gekennzeichnet durch** das gleichzeitige Prägen eines weiteren Abschnitts des Films (14), wobei die Außenfläche des Perforierzylinders (10) auch eine Relieffläche (16) umfasst.

13. Perforierzylinder zum Perforieren eines dünnen Films, umfassend einen hohlen Zylinder (10), der mit Durchgangsöffnungen (22) versehen ist, die durch Dämme (24) getrennt sind, und aus faserverstärktem Kunststoff besteht, **dadurch gekennzeichnet, dass** der Perforierzylinder ein dünnwandiger Zylinder (10) ist, der in Endringen gehalten wird, wobei der Zylinder (10) eine gesamte Wanddicke im Bereich von 0,010-1 mm aufweist, wobei die Fasern des faserverstärkten Kunststoffs in einem Bereich von 0-20° bezüglich der Längsachse des Zylinders (10) axial orientiert sind.

14. Perforierzylinder zum Perforieren eines dünnen Films, umfassend einen hohlen Zylinder (10), der mit Durchgangsöffnungen (22) versehen ist, die durch Dämme (24) getrennt sind, und aus faserverstärktem Kunststoff besteht, **dadurch gekennzeichnet, dass** der Perforierzylinder ein dünnwandiger Zylinder (10) ist, der durch eine Stützwalze abgestützt wird, wobei der Zylinder (10) eine gesamte Wanddicke im Bereich von 0,010-1 mm aufweist, wobei die Fasern des faserverstärkten Kunststoffs in einem Bereich von 70-90° bezüglich der Längsachse des Zylinders (10) radial orientiert sind.

15. Perforierzylinder zum Perforieren eines dünnen Films, umfassend einen hohlen Zylinder (10), der mit Durchgangsöffnungen (22) versehen ist, die durch Dämme (24) getrennt sind, und aus faserverstärktem Kunststoff besteht, **dadurch gekennzeichnet, dass** der Perforierzylinder ein dünnwandiger Zylinder (10) mit einer gesamten Wanddicke im Bereich von 0,010-1 mm ist, der aus mindestens zwei Schichten von faserverstärkten Kunststoff zusammengefügt ist, wobei die Fasern in einer Schicht in einer Richtung orientiert sind, wobei die Faserrichtungen der verschiedenen Schichten nicht parallel zueinander verlaufen.

16. Perforierzylinder nach einem der vorangehenden Ansprüche 13-15, **dadurch gekennzeichnet, dass** die gesamte Wanddicke des Zylinders im Bereich von 0,010-0,700 liegt.

17. Perforierzylinder nach Anspruch 16, **dadurch gekennzeichnet, dass** die gesamte Wanddicke des Zylinders im Bereich von 0,020-0,300 liegt.

18. Perforierzylinder nach einem der vorangehenden Ansprüche 13-17, **dadurch gekennzeichnet, dass** der faserverstärkte Kunststoff eine oder mehrere Schichten mit unidirektionalen Fasern umfasst.

19. Perforierzylinder nach einem der vorangehenden Ansprüche 13-18, **dadurch gekennzeichnet, dass** der Fasergehalt mehr als 45 Volumenprozent ist.

20. Perforierzylinder nach Anspruch 19, **dadurch gekennzeichnet, dass** der Fasergehalt mehr als 55 Volumenprozent ist.

21. Perforierzylinder nach einem der vorangehenden Ansprüche 13-20, **dadurch gekennzeichnet, dass** die Längsachse einer Durchgangsöffnung (22) einen Winkel β mit einer Tangentenebene (1) am Zylinder (10) an der Stelle der entsprechenden Öffnung (22) bildet, vorausgesetzt, dass β ≠ 90°.

22. Perforierzylinder nach einem der vorangehenden Ansprüche 13-21, **dadurch gekennzeichnet, dass** die Beziehung zwischen der Wanddicke (d) des Zylinders (10), dem hydraulischen Durchmesser (D) einer Öffnung (22) und dem Winkel α, den die Längsachse der Öffnung (22) mit einer Tangentenebene (1) am Zylinder (10) an der Stelle der Öffnung (22) bildet, $d \geq D/\cos \alpha$ ist.

23. Perforierzylinder nach einem der vorangehenden Ansprüche 13-22, **dadurch gekennzeichnet, dass** das Verhältnis der Wanddicke (d) des Zylinders (10) zum maximalen Radius ($r_{max}$) einer Öffnung (22) auf der Betriebsseite mehr als 1,15 ist.

24. Perforierzylinder nach einem der vorangehenden Ansprüche 13-23, **dadurch gekennzeichnet, dass** die Durchgangsöffnungen (22) verschiedene Durchmesser aufweisen.

25. Perforierzylinder nach einem der vorangehenden Ansprüche 13-24, **dadurch gekennzeichnet, dass** der Zylinder auch mindestens eine Relieffläche (16) zum Prägen des dünnen Films umfasst.

**Revendications**

1. Procédé pour la perforation d'un film mince (14), en particulier un film plastique, dans lequel le film (14) est guidé au dessus d'un cylindre de perforation creux (10), qui est pourvu d'ouvertures traversantes (22) séparées par des ponts (24) et fabriqué en plastique renforcé de fibres, et une différence de pression fluide est appliquée au film (14), de telle sorte que des perforations sont formées en le film mince (14), **caractérisé en ce que** le cylindre de perforation est un cylindre à paroi mince (10) maintenu dans des anneaux terminaux, ledit cylindre (10) ayant une épaisseur de paroi totale dans une plage de 0, 010 à 1 mm, dans lequel les fibres du plastique renforcé de fibres sont orientées axialement dans une plage de 0 à 20° par rapport à l'axe longitudinal du cylindre (10).

2. Procédé pour la perforation d'un film mince (14), en particulier un film plastique, dans lequel le film (14) est guidé au dessus d'un cylindre de perforation creux (10), qui est pourvu d'ouvertures traversantes (22) séparées par des ponts (24) et fabriqué en plastique renforcé de fibres, et une différence de pression fluide est appliquée au film (14), de telle sorte que des perforations sont formées en le film mince (14), **caractérisé en ce que** le cylindre de perforation est un cylindre à paroi mince (10) supporté par un rouleau de support, ledit cylindre (10) ayant une épaisseur de paroi totale dans une plage de 0, 010 à 1 mm, dans lequel les fibres du plastique renforcé de fibres sont orientées radialement dans une plage de 70 à 90° par rapport à l'axe longitudinal du cylindre (10).

3. Procédé pour la perforation d'un film mince (14), en particulier un film plastique, dans lequel le film (14) est guidé au dessus d'un cylindre de perforation creux (10), qui est pourvu d'ouvertures traversantes (22) séparées par des ponts (24) et fabriqué en plastique renforcé de fibres, et une différence de pression fluide est appliquée au film (14), de telle sorte que des perforations sont formées en le film mince (14), **caractérisé en ce que** le cylindre de perforation est un cylindre à paroi mince (10) ayant une épaisseur de paroi totale dans une plage de 0, 010 à 1 mm, assemblé à partir d'au moins deux couches de plastique renforcé de fibres, les fibres d'une couche étant orientées dans une direction, les directions des fibres des différentes couches ne s'étendant pas parallèlement les unes aux autres.

4. Procédé de performation selon l'une quelconque des revendications précédentes, **caractérisé en ce que** l'épaisseur de paroi totale du cylindre est dans une plage de 0,010-0,700 mm.

5. Procédé de perforation selon la revendication 4, **caractérisé en ce que** l'épaisseur de paroi totale du cylindre est dans une plage 0,020-0,300 mm.

6. Procédé de perforation selon l'une quelconque des revendications précédentes, **caractérisé en ce que** le plastique renforcé de fibres comprend une ou plusieurs couches avec des fibres unidirectionnelles.

7. Procédé de perforation selon l'une quelconque des revendications précédentes, **caractérisé en ce que** la teneur en fibres est supérieure à 45% en volume.

8. Procédé de perforation selon la revendication 7, **caractérisé en ce que** la teneur en fibres est supérieure à 55% en voiume.

9. Procédé de perforation selon l'une quelconque des revendications précédentes, **caractérisé en ce que** l'axe longitudinal d'une ouverture traversante (22) forme un angle $\beta$ avec un plan tangent (1) au cylindre (10) à l'emplacement de l'ouverture correspondante (22), sous réserve que $\beta \neq 90°$.

10. Procédé de perforation selon l'une quelconque des revendications précédentes, **caractérisé en ce que** la relation entre l'épaisseur (d) de la paroi du cylindre (10), le diamètre hydraulique (D) d'une ouverture (22) et l'angle $\alpha$ que forme l'axe longitudinal de l'ouverture (22) avec le plan tangent (1) au cylindre (10) à l'emplacement de l'ouverture (22) est : $d \geq D/\cos\alpha$.

11. Procédé de perforation selon l'une quelconque des revendications précédentes, **caractérisé en ce que** le rapport de l'épaisseur (d) de la paroi du cylindre (10) au rayon maximal ($r_{max}$) d'une ouverture (22) sur le côté de travail du cylindre (10) est supérieur à 1,15.

12. Procédé de perforation selon l'une quelconque des revendications précédentes, **caractérisé par** le gaufrage simultané d'une autre section du film (14), la surface extérieure du cylindre de perforation (10) comprenant également une zone en relief (16).

13. Cylindre de perforation pour la perforation d'un film mince, comprenant un cylindre creux (10) qui est pourvu d'ouvertures traversantes (22) séparées par des ponts (24), et est fabriqué en plastique renforcé de fibres, **caractérisé en ce que** le cylindre de perforation est un cylindre à paroi mince (10) maintenu dans des anneaux terminaux, ledit cylindre (10) ayant une épaisseur de paroi totale dans la plage de 0, 010 à 1 mm, dans lequel les fibres du plastique renforcé par des fibres sont orientées axialement dans une plage de 0 à 20° par rapport à l'axe longitudinal du cylindre (10).

14. Cylindre de perforation pour la perforation d'un film mince, comprenant un cylindre creux (10) qui est pourvu d'ouvertures traversantes (22) séparées par des ponts (24), et est fabriqué en plastique renforcé de fibres **caractérisé en ce que** le cylindre de perforation est un cylindre à paroi mince (10) supporté par un rouleau de support, ledit cylindre (10) ayant une épaisseur de paroi totale dans la plage de 0, 010 à 1 mm, dans lequel les fibres du plastique renforcé par des fibres sont orientées radialement dans une plage de 70 à 90° par rapport à l'axe longitudinal du cylindre (10).

15. Cylindre de perforation pour la perforation d'un film mince, comprenant un cylindre creux (10) qui est pourvu d'ouvertures traversantes (22) séparées par des ponts (24), et est fabriqué en plastique renforcé de fibres **caractérisé en ce que** le cylindre de perforation est un cylindre à paroi mince (10) ayant une épaisseur de paroi totale dans la plage de 0, 010 à 1 mm, qui est assemblé à partir d'au moins deux couches de plastique renforcé de fibres, les fibres d'une couche étant orientées dans une direction, les directions des fibres des différentes couches ne s'étendant pas parallèlement les unes aux autres.

16. Cylindre de perforation selon l'une quelconque des revendications précédentes 13 à 15, **caractérisé en ce que** l'épaisseur de paroi totale du cylindre est dans la plage 0,010-0,700 mm.

17. Cylindre de perforation selon la revendication 16, **caractérisé en ce que** l'épaisseur de paroi totale du cylindre est dans la plage 0,020-0,300 mm.

18. Cylindre de perforation selon l'une quelconque des revendications précédentes 13 à 17, **caractérisé en ce que** le plastique renforcé de fibres comprend une ou plusieurs couches avec des fibres unidirectionnelles.

19. Cylindre de perforation selon l'une quelconque des revendications précédentes 13 à 18, **caractérisé en ce que** la teneur en fibres est supérieure à 45% en volume.

20. Cylindre de perforation selon la revendication 19, **caractérisé en ce que** la teneur en fibres est supérieure à 55% en volume.

21. Cylindre de perforation selon l'une quelconque des revendications précédentes 13 à 20, **caractérisé en ce que** l'axe longitudinal d'une ouverture traversante (22) forme un angle $\beta$ avec un plan tangent (1) au cylindre (10) à l'emplacement de l'ouverture correspondante (22), à condition que $\beta \neq 90°$.

**22.** cylindre de perforation selon l'une quelconque des revendications précédentes 13 à 21, **caractérisé en ce que** la relation entre l'épaisseur (d) de la paroi du cylindre (10), le diamètre hydraulique (D) d'une ouverture (22) et l'angle $\alpha$ que forme l'axe longitudinal de l'ouverture (22) avec un plan tangent (1) au cylindre (10) à l'emplacement de l'ouverture (22) est : $d \geq D/\cos\alpha$.

**23.** Cylindre de perforation selon l'une quelconque des revendications précédentes 13 à 22, **caractérisé en ce que** le rapport de l'épaisseur (d) de la paroi du cylindre (10) au rayon maximal ($r_{max}$) d'une ouverture (22) sur le côté de travail du cylindre (10) est supérieur à 1,15.

**24.** Cylindre de perforation selon l'une quelconque des revendications précédentes 13 à 23, **caractérisé en ce que** les ouvertures traversantes (22) présentent différents diamètres.

**25.** Cylindre de perforation selon l'une quelconque des revendications précédentes 13 à 24, **caractérisé en ce que** le cylindre comprend également au moins une zone en relief (16) pour le gaufrage du film fin.

FIG. 1.

FIG. 3.

EP 1 377 416 B1

FIG. 2.

FIG. 4.